# EUROPEAN PATENT APPLICATION

(11) **EP 4 151 527 A1**
(43) Date of publication of application: **22.03.2023**
(21) Application number: 21197512.3
(22) Date of filing: 17.09.2021
(51) Int. Cl.: B64D 11/04

(54) **A GALLEY UNIT WITH HOT WATER SUPPLY**

(71) Applicant: Airbus Operations GmbH, 21129 Hamburg (DE)
(72) Inventor: HÖLSCHER, Heinrich, 21129 Hamburg (DE); KEMPA, Michael, 21129 Hamburg (DE); KIEHNE, Oliver, 21129 Hamburg (DE); REISS, Matthias, 21129 Hamburg (DE)
(74) Representative: LKGLOBAL Lorenz & Kopf PartG mbB Patentanwälte

(57) **Abstract**

A galley unit for a cabin of an aircraft is proposed, comprising a housing comprising at least one tray for receiving galley devices, a central water tank arranged at a distance to the at least one tray or in one of the at least one tray, the water tank having at least one water outlet, a heating device arranged inside the water tank, a control unit coupled to the heating device, and at least one hot water line coupled to the at least one water outlet and reaching into at least one of the at least one tray, wherein the control unit is adapted for controlling the heating device to maintain a predetermined temperature of water inside the water tank.

## Description

### Technical field

The invention relates to a galley unit, a cabin, and an aircraft.

### Background of the invention

Commercial aircraft usually comprise galleys installed in a cabin and providing a plurality of functions directed to storing and preparing food and beverages. Often, a galley comprises a housing arranged on a cabin floor, wherein a bottom section of the housing comprises trolley parking spaces and wherein a top section comprises a plurality of trays for receiving galley inserts, standard units, and other components. The galley inserts may comprise ovens and beverage makers, such as coffee machines. Beverage makers are often coupled with a water source or comprise individual water tanks and include heaters for immediate heating of water to a desired temperature. The electrical power supply system of a galley is often determined by the peak power demands of the galley inserts in total. Here, it is assumed that all installed galley inserts are operated at the same time and with their maximum operating power.

### Summary of the invention

It is an object of the invention to provide a galley or a galley unit that reduces the total power demand without reducing the functionality in comparison with usual galleys. It may be a further object to optimize the space usage inside the galley in particular for providing hot beverages.

The object is met by a galley unit according to the features of independent claim 1. Advantageous embodiments and further improvements may be gathered from the subclaims and the following description.

A galley unit for a cabin of an aircraft is proposed, comprising a housing comprising at least one tray for receiving galley devices, a central water tank arranged at a distance to the at least one tray or in one of the at least one tray, the water tank having at least one water outlet, a heating device arranged inside the water tank, a control unit coupled to the heating device, and at least one hot water line coupled to the at least one water outlet and reaching into at least one of the at least one tray, wherein the control unit is adapted for controlling the heating device to maintain a predetermined temperature of water inside the water tank.

The housing may be formed in a way that the galley unit is placeable into a receiving space of an existing galley. It may exemplarily be placeable inside a receiving space near the front of a galley or in an internal or rear region facing away from the front. As an alternative, the galley unit itself may constitute a galley or a galley module, and may thus be directly placeable on a cabin floor.

The galley comprising the galley unit or realized in form of the galley unit may be arranged along a width direction or along a longitudinal direction of the aircraft cabin. For example, the galley may be placed along the width direction, i.e. transverse to the longitudinal axis of the aircraft, and extend about a part of the cabin width or about the whole width. It may be formed as a single module, which is combinable with other modules to form a cabin monument. The other modules do not necessarily comprise galley modules, but may also be lavatory modules, stowage bin modules and other. Such a galley module may be designed to be placed in a forward section of an aircraft cabin, a center section, or a rear section. If it is placed in a rear section, it may comprise a lateral wall, which tapers in an axial direction.

The at least one tray may be dimensioned to receive standard galley devices, i.e. galley inserts, according to common standards. The at least one tray may include a back plane having electrical interfaces. Instead of using individual heating elements inside a plurality of galley devices for immediate heating of fresh water, the central water tank is provided, which delivers hot water over extended time periods to the respective galley devices. Preferably, a single central water tank is used. However, depending on the size of the galley unit and the number of galley devices, also two or more water tanks may be provided, which each may comprise a heating device and which are connected to a plurality of galley devices each.

The heating device may exemplarily comprise an electrical heater. However, other variants are possible. For example, the heating device may be an apparatus that receives waste heat from other devices, such as electronics coolers, fuel cells, devices that conduct a combustion process, etc., to deliver the received waste heat to water in the central water tank.

The use of a central water tank with a heating device allows to heat up a comparably large volume of water at once and maintain a predetermined temperature. If one of the galley devices requires hot water, it may simply draw hot water from the central water tank. Thus, it does not need to heat cold fresh water to the desired temperature itself. The individual heating element inside the galley device is not required and the galley device may thus comprise a more compact design and a clearly reduced power demand.

The water inside the central water tank may be heated rather slowly and more continuously instead of on demand. The heating process in the central water tank thus takes place over a clearly larger period of time compared to the immediate heating inside usual individual galley devices. As preferably a plurality of galley devices are supplied with hot water from the central water tank, several individual heating elements can be eliminated. A significant reduction in peak galley power demand results, thus allowing for a significant weight reduction in the galley power supply system.

It is conceivable, that the central water tank with the heating device arranged therein may replace heating elements and associated control units in at least five individual galley devices. This may be even further improved by operating the heating device only when other galley devices, such as ovens, are not active. Compared to a usual setup this could further reduce the power demand in the respective galley.

The central water tank may be placed in one of the at least one tray. As an alternative, it may be arranged behind or adjacent to the at least one tray. For the sake of easy handling and operation, a user interface may be provided, which allows cabin personnel to check the operation, control the operation, check the water level and other parameters. It is conceivable, that a display is arranged in a front wall of the respective galley unit. It is also conceivable that the user interface is integrated into an already existing user interface, such as an operating panel of a galley or the like. For this, the control unit may comprise a suitable interface, which is connectable to an onboard data line or network.

To sum up, replacing a plurality of individual heating elements in several galley devices by a single heating device in a central water tank is advantageous regarding the total power demand for a galley. Furthermore, the complexity of the individual galley devices may be reduced, as they do not require individual heating elements and associated control units.

Advantageously, the at least one hot water line may comprise a plurality of hot water lines reaching into a plurality of trays. Hence, the galley unit comprises a plurality of galley devices, which each require hot water. All galley devices are connected to the water outlet through the hot water lines. It is not necessary that the central water tank has an outlet for each of the lines. It is conceivable that a main line is connected to a water outlet and a plurality of branch lines branch off the main line. However, also a combination of a plurality of main lines and branch lines is conceivable, i.e. using two or three main lines, which are connected to branch lines depending on the intended setup of the galley unit. For example, the water tank may be arranged in a central region of a large galley unit and a first main hot water line extends to a group of trays on the left-hand side and a second main hot water line extends to another group of trays on the right-hand side. Other variants are possible, of course.

The water tank may be thermally insulated. By thermally insulating the tank, an intermittent heating of water stored in the tank with a reduced operation frequency is possible. The power demand for maintaining the temperature is thus further reduced.

The water tank may comprise at least one vent valve designed for ventilating the tank for pressure compensation. The vent valve may provide ventilation of the water tank during a filling process of the tank. After the filling process or a certain time period before the end of the filling process the vent valve may be closed, such that the tank is sealed and a pressure can be built up. The tank may be pressurized through the filling process itself or by using a separate, active device for pressurizing the tank. An overpressure inside the tank allows for simple water supply to the respective galley devices. These may simply open an individual supply valve and draw hot water. The water tank may be filled to match the capacity of the heating unit and always ensures a constant temperature of the water. It may, however, also be possible that galley devices are only supplied with hot water when cold water flows into the central water tank and pushes hot water (or a mixture of both hot and cold water) out of the tank.

In another variant, the tank may comprise a supply pump that is in fluid communication with the water stored in the tank. As the water tank constitutes a sealed enclosure, drawing water from the tank through the supply pump would lead to an underpressure and feeding water into the tank would lead to an overpressure. Thus, the above-mentioned at least one vent valve is advantageous for ventilating the tank for a pressure compensation. It is conceivable that two vent valves are provided, wherein both vent valves are realized as a one-way-valve. This means that if a pressure difference acts onto the water tank, one of the two vent valves opens to allow a compensation airflow. In particular, integration of a vent valve may in general be useful for aircraft application, as there is a clear pressure difference between cruise flight and ground operation that acts onto the water tank shell.

The water tank may comprise a water inlet connectable to a water source for selectively filling the water tank with fresh water. Filling the water tank with fresh water may be conducted on ground. However, in a galley unit particularly for long-haul aircraft, it may be feasible to refill the water tank also during flight. Depending on the technology for supplying water to the individual galley devices, the water tank may continuously be supplied with fresh water to provide a sufficient pressure to deliver water through the water outlet, as mentioned above. At least in this case, the water tank may be coupled with a freshwater tank inside the aircraft, wherein a control valve is provided for selectively filling the water from the freshwater tank into the hot water tank. The control unit may be connected to such a control valve to control its operation. Furthermore, it may also be connected to water level sensors inside the water tank, such that a minimum water level may always be ensured.

If the water tank is intended for being pressurized through an active means or in an initial filling process, or if a supply pump connected to the water outlet is used, the size of the water tank may be designed in accordance with the number of passengers seats in a cabin section associated with the galley unit, such that the water volume inside the hot water tank is sufficient for a meal or beverage serving process. The water tank may be refilled after all meals and beverages are served to be heated up to the predetermined temperature.

The at least one hot water line may be heated or may be coupled to a circulation apparatus connected to the water tank for maintaining an elevated temperature inside the respective hot water line. Thus, it is avoided that the hot water lines cool down to an extent that is unacceptable for the respective galley devices. By permanently circulating hot water, the hot water lines may maintain a certain minimum temperature. For reducing the effect of cooling down, the hot water lines may also be thermally insulated. Instead of circulating water, also heating elements may be provided inside or on the respective hot water lines.

The galley unit may further comprise at least one galley device arranged inside one of the at least one tray and having at least one hot water consuming apparatus.

The at least one galley device may comprise a plurality of beverage makers coupled with the at least one hot water line. For example, a beverage maker may be a coffee machine, which e.g. utilizes coffee pads. As the installation volume of the components inside a galley device are reduced due to eliminating their heating elements and associated control units, it is possible to include more than just one beverage maker into one tray, i.e. into one single galley device. Hence, the required installation volume for the galley devices in total is reduced. Thus, the galley unit may even be decreased in size.

The beverage makers may be arranged one behind each other. Thus, the depth of the tray may be used for housing several beverage makers.

The at least one hot water consuming apparatus may be arranged on a slidable tray, which is designed for being pulled out of a front side of the respective galley device. By placing the hot water consuming apparatus on the slidable tray, it may be pulled out before use. It allows to increase the compactness of the respective galley device even more. Further devices may be arranged on the slidable tray, e.g. the above-mentioned several beverage makers. By connecting the hot water consuming apparatus through a flexible hose to a hot water line or by using a flexible hose as a hot water line, the hot water consuming apparatus may be operated in the extended or retracted position.

The water tank, the heating device and the control unit may form a coherent unit replaceably installed in the galley unit. Such a coherent unit may be replaced or installed depending on the individual requirements of the aircraft operator. Thus, a unit with a larger or a smaller tank may be provided and simply be installed into the galley unit. Also, the maintainability is improved, as such a coherent unit may simply be replaced or removed for repair to decrease maintenance time on board, thereby increasing the availability of the aircraft.

However, also the heating device and/or the control unit may be designed to be separately replaceable to avoid undoing and redoing of connections to the water tank in case of a malfunction of the heating device or the control unit.

The control unit may be adapted for controlling the heating device to maintain the predetermined temperature, which corresponds to a lowest hot water temperature required by the entirety of the at least one galley device. The temperature to be maintained inside the central hot water tank does not need to be adjusted several times if different types of galley devices are used.

If the heating device is realized in the form of a waste heat receiving apparatus, the predetermined temperature may correspond to a temperature level achieved by the waste heat receiving apparatus. Thus, the predetermined temperature may be slightly lower than what is required in the at least one galley device.

At least one of the at least one galley device comprises an additional heater for heating water delivered by the at least one hot water line above the predetermined temperature. For example, one type of galley device may require hot water with a temperature of 10° below the temperature demand of another type of galley device. Thus, the galley device with the higher temperature demand may comprise an additional heater for providing the additional amount of heat. However, as the resulting temperature raise is small, the additional heater is clearly decreased in size compared to usual heating elements used in usual galley devices and requires clearly less power for operation. The additional heater may be realized in the form of a flow-through heater, in particular an electric flow-through heater.

One of the at least one galley device may be a hot water faucet. Hot water, e.g. for preparing tea, may simply be drawn from the hot water tank through the faucet. It is not necessary to include the faucet into one of the at least one tray, but it may simply be arranged in a practicable location in the galley unit. For example, it may be arranged above a sink.

In a further advantageous embodiment, the galley unit comprises a pipe treatment system. The galley unit has a drainage valve for draining water from the water tank and/or the at least one hot water line. The drainage valve may be controlled by the control unit. Furthermore, the drainage valve may be couplable with a sink, a waste-water receptacle, or a port for attaching a mobile waste-water receptacle. The pipe treatment system allows to flush the water tank and/or the at least one hot water line for disinfection of descaling. A suitable substance for disinfecting and/or descaling may be delivered through the water inlet. Reference is made to EP2737135A2 regarding a suitable pipe treatment system.

Furthermore, the heating device may be adapted to heat the water in the water tank to a temperature that allows a thermal disinfection of the water tank and/or the at least one hot water line. The control unit may be adapted to heat the water in the water tank in a predetermined frequency for disinfection, e.g. once a day, should the usual water temperature inside the water tank not be sufficient for a disinfection.

The invention further relates to an aircraft, having a fuselage and a cabin installed inside the fuselage, further comprising at least one galley unit according to the above description installed inside the cabin.

### Brief description of the figures

In the following, the attached drawings are used to illustrate exemplary embodiments in more detail. The illustrations are schematic and not to scale. Identical reference numerals refer to identical or similar elements. They show:
- Fig. 1: an exemplary embodiment of a galley unit,
- Fig. 2: an exemplary embodiment of a galley unit,
- Fig. 3: further details of an exemplary embodiment of a galley unit,
- Fig. 4: a further exemplary embodiment of a galley unit,
- Fig. 5: an aircraft.

### Detailed description of exemplary embodiments

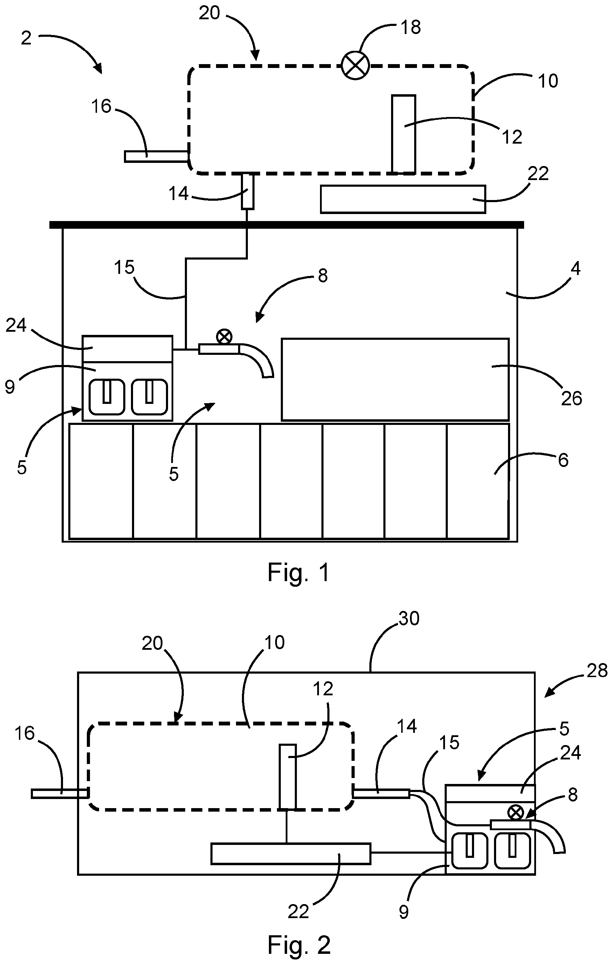

Fig. 1 shows a galley unit 2 for a cabin of an aircraft. The galley unit 2 comprises a housing 4 comprising a plurality of trays 5 for receiving galley devices. Here, the housing 4 is comparably large and constitutes a galley, i.e. a galley monument, itself, or a galley module to be combined with other modules to form a cabin monument. Trolley parking spaces 6 are provided at a bottom region of the housing 4. A galley device 8 in form of a faucet as well as a galley device 9 in form of a beverage maker are provided in the galley unit 2.

A central water tank 10 is exemplarily arranged in a top region of the galley unit 2 and comprises a heating device 12 arranged inside the water tank 10. Hot water may be drawn out of the tank through a water outlet 14, which is coupled to the galley devices 8 and 9 through a hot water line 15. The tank 10 may be filled through a water inlet 16, which may be coupled to a freshwater source inside the aircraft or it may be refilled with water from a water source carried into the aircraft cabin during ground operation. The water tank 10 may be pressurized in order to simplify the supply of hot water to the galley devices 8 and 9.

The water tank 10 comprises a vent valve 18, which allows to conduct a pressure compensation inside the tank 10 if required during a filling process and/or water drawing process.

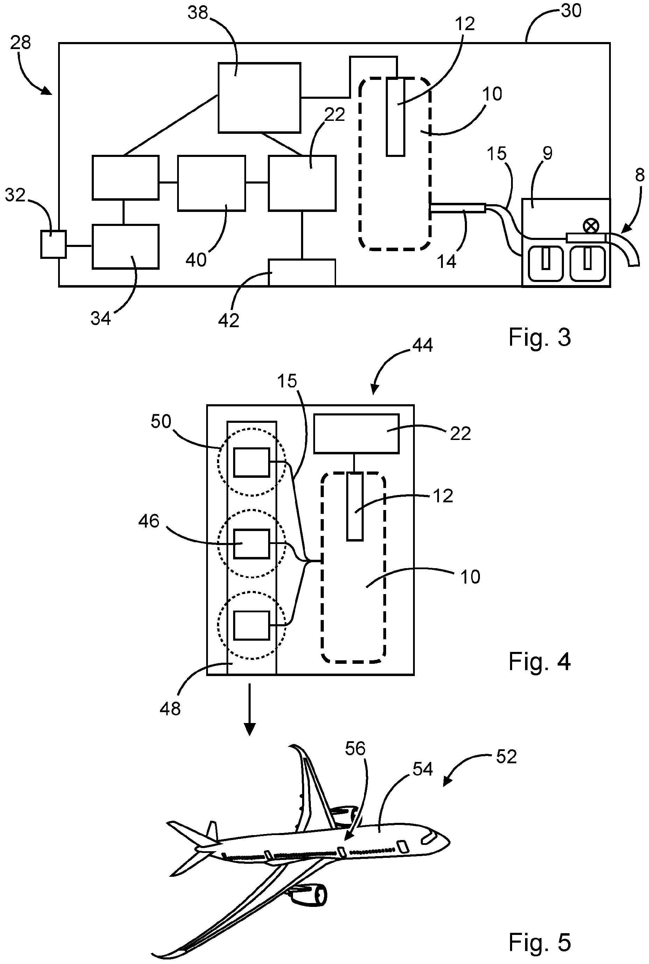

Exemplarily, the tank 10 comprises a thermal insulation 20 for reducing heat loss. A control unit 22 is coupled with the heating device 12 and a user interface 24. In Fig. 1, the space gained by removal of individual water heaters in galley devices is indicated with rectangle 26, particularly through the integration of more compact galley devices 9 as described in view of Fig. 4.

Fig. 2 shows a part inside a galley unit 28 in a schematic view. Here, the tank 10 is integrated together with the control unit 22 and the water outlet 14 in a housing 30. The galley devices 8 and 9 are exemplarily directly adjacent to or in front of the tank 10 and are connected to the water outlet 14.

In current aircraft galleys, each hot water consumer, such as beverage makers or hot water faucets, may be equipped with an individual tank. The tank 10 used by several galley devices 8 and 9 allows beverage making functions to be installed in a single, combined galley device without gaps in between. The faucet 9 is added to a facia of the galley unit 28 with little or no increase to the width of the galley device 9. This allows a more space efficient provision of the functions inside a galley unit 28 compared to current designs.

Fig. 3 shows a more detailed setup of the galley unit 28. Besides the components shown in Fig. 2, several other components found in usual galley devices are integrated into the galley unit 28 associated with the central water tank 10. Here, an electrical power interface 32 is connectable to an onboard power supply line. Fuses 34 are provided, which are connected to the power interface 32. An EMI filter device 36 reduces electromagnetic noise and leads power to a heater switch 38, which selectively supplies electrical power to the heating device 12. The heater switch 38 is coupled with the control unit 22, which in turn is provided with electrical power through a low voltage converter 40. The control unit 22 comprises an interface unit 42, which is couplable with a data network or a data line, such that a user interface can be provided outside the control unit 22.

Fig. 4 shows a galley device 44, which includes three beverage makers 46 in the form of coffee pad devices arranged one behind each other on a slidable tray 48. The beverage makers 46 are very compact, as they do not require individual water tanks or individual heaters. Three mugs 50 may be filled with freshly prepared coffee at the same time, as the depth of a tray 5 is completely utilized due to the compact size of the beverage makers 46. The mugs 50 are accessible through a separate slidable tray.

Fig. 5 shows an aircraft 52 having a fuselage 54 and a cabin 56 arranged therein. At least one of the previously shown galley units may be arranged in the cabin 56. The separation of the central water tank 10 from the point of use of the hot water also allows efficient embodiment in future aircraft, where distribution of inaccessible space may be different to existing aircraft designs. For example, a blended wing body has significant space available insufficiently high for crew to access it.

### Reference numerals

- 2: galley unit
- 4: housing
- 5: tray
- 6: trolley parking space
- 8: galley device
- 9: galley device
- 10: central water tank
- 12: heating device
- 14: water outlet
- 15: hot water line
- 16: water inlet
- 18: vent valve
- 20: thermal insulation
- 22: control unit
- 24: user interface
- 26: space gained
- 28: galley unit
- 30: housing
- 32: power interface
- 34: fuse
- 36: EMI filter device
- 38: heater switch
- 40: low voltage converter
- 42: interface unit
- 44: galley device
- 46: beverage maker / hot water consuming apparatus
- 48: slidable tray
- 50: mug
- 52: aircraft

- 54: fuselage
- 56: cabin

## Claims

1. A galley unit (2, 28) for a cabin (56) of an aircraft (52), comprising
a housing (4, 30) comprising at least one tray (5) for receiving galley devices (8, 9, 44),
a central water tank (10) arranged at a distance to the at least one tray (5) or in one of the at least one tray (5), the water tank (10) having at least one water outlet (14),
a heating device (12) arranged inside the water tank (10),
a control unit (22) coupled to the heating device (12), and
at least one hot water line (15) coupled to the at least one water outlet (14) and reaching into at least one of the at least one tray (5),
wherein the control unit (22) is adapted for controlling the heating device (12) to maintain a predetermined temperature of water inside the water tank (10).

2. The galley unit (2, 28) according to claim 1,
wherein the at least one hot water line (15) comprises a plurality of hot water lines (15) reaching into a plurality of trays (5).

3. The galley unit (2, 28) according to claim 1 or 2,
wherein the water tank (10) is thermally insulated.

4. The galley unit (2, 28) according to any of the preceding claims,
wherein the water tank (10) comprises at least one vent valve (18) designed for ventilating the tank (10) for pressure compensation.

5. The galley unit (2, 28) according to any of the preceding claims,
wherein the water tank (10) comprises a water inlet (16) connectable to a water source for selectively filling the water tank (10) with fresh water.

6. The galley unit (2, 28) according to any of the preceding claims,
wherein the at least one hot water line (15) is heated or is coupled to a circulation apparatus connected to the water tank (10) for maintaining an elevated temperature inside the respective hot water line (15).

7. The galley unit (2, 28) according to any of the preceding claims,
further comprising at least one galley device (8, 9, 44) arranged inside one of the at least one tray (5) and having at least one hot water consuming apparatus (46).

8. The galley unit (2, 28) according to claim 7,
wherein the at least one galley device (8, 9, 44) comprises a plurality of beverage makers (46) coupled with the at least one hot water line (15).

9. The galley unit (2, 28) according to claim 8,
wherein the beverage makers (46) are arranged one behind each other.

10. The galley unit (2, 28) according to any of the claims 7 to 9,
wherein the at least one hot water consuming apparatus (46) is arranged on a slidable tray (48), which is designed for being pulled out of a front side of the respective galley device (8, 9, 44).

11. The galley unit (2, 28) according to any of the preceding claims,
wherein the water tank (10), the heating device (12) and the control unit (22) form a coherent unit replaceably installed in the galley unit (2, 28).

12. The galley unit (2, 28) according to any of the preceding claims,
wherein the control unit (22) is adapted for controlling the heating device (12) to maintain the predetermined temperature, which corresponds to a lowest hot water temperature required by the entirety of the at least one galley device (8, 9, 44).

13. The galley unit (2, 28) according to claim 11,
wherein at least one of the at least one galley device (8, 9, 44) comprises an additional heater for heating water delivered by the at least one hot water line (15) above the predetermined temperature.

14. The galley unit (2, 28) according to any of the preceding claims,
wherein one of the at least one galley device (8, 9, 44) is a hot water faucet (9).

15. Aircraft (52), having a fuselage (52) and a cabin (54) installed inside the fuselage (52), further comprising at least one galley unit (2, 28) according to any of the preceding claims installed inside the cabin (54).
